Europäisches Patentamt

(19) European Patent Office

Office européen des brevets

(11) **EP 0 561 981 B1**

(12) **EUROPEAN PATENT SPECIFICATION**

(45) Date of publication and mention
of the grant of the patent:
**03.01.1996 Bulletin 1996/01**

(21) Application number: **92902082.4**

(22) Date of filing: **10.12.1991**

(51) Int. Cl.$^6$: **B05D 5/08**, C09D 127/18,
C09D 179/08, C09D 181/06

(86) International application number: **PCT/US91/09067**

(87) International publication number: **WO 92/10309**
**(25.06.1992 Gazette 1992/14)**

(54) **NON-STICK COATING SYSTEM WITH PTFE AND PFA OR FEP FOR CONCENTRATION GRADIENT**

NICHTHAFTENDES BESCHICHTUNGSSYSTEM MIT PTFA UND PFA ODER FEP FÜR KONZENTRATIONSGRADIENTEN

SYSTEME D'ENDUITS ANTI-ADHERANT AVEC PTFE ET PFA OU FEP POUR PRODUIRE UN GRADIENT DE CONCENTRATION DANS L'ENDUIT

(84) Designated Contracting States:
**BE DE ES FR GB IT NL SE**

(30) Priority: **12.12.1990 US 626491**
**23.09.1991 US 762068**

(43) Date of publication of application:
**29.09.1993 Bulletin 1993/39**

(73) Proprietor: **E.I. DU PONT DE NEMOURS AND COMPANY**
**Wilmington Delaware 19898 (US)**

(72) Inventor: **TANNENBAUM, Harvey, Paul**
**Wynnewood, PA 19096 (US)**

(74) Representative: **Abitz, Walter, Dr.-Ing. et al**
**D-81628 München (DE)**

(56) References cited:
**EP-A- 0 056 280**       **EP-A- 0 100 889**
**EP-A- 0 389 966**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.5/3.4

## Description

This invention relates to coatings systems, such as for cookware, which minimize sticking. More particularly, it relates to multilayer coating systems that can be used directly on smooth, untreated substrates and which provide concentration gradients within the coating.

Generally in the art a metal or glass substrate is roughened by some means before the first layer of coating is applied so that mechanical bonding will assist chemical adhesive means in holding the coating onto the substrate. Typical roughening means include acid etching, sand-blasting, grit-blasting, and baking a rough layer of glass, ceramic or enamel frit onto the substrate. The problem of adhesion of non-stick coatings to substrates is exacerbated by the nature of the coatings. If the coating is optimized for release to prevent food particles from sticking to it, for easy clean-up after cooking or durability, or to facilitate low friction sliding contact, almost by definition there will be difficulties in making it adhere well to the substrate.

The substrate can be metal, often aluminum or stainless steel used for cookware or industrial applications. It can be glass or ceramic. It might even be plastic for microwave oven cookware, or it could be an industrial article such as a saw made of carbon steel. Whatever the substrate or the application, if it is necessary to roughen the substrate to make the coating adhere, that at least adds cost and can cause other difficulties including creating a rough profile which can protrude or telegraph through the coating. This is especially undesirable when smoothness is sought, such as for saws, steam irons and copier rolls. The environmental cost of disposing of etchant materials can be significant. Sometimes, especially for glass and ceramic substrates, it also can cause unacceptable weakness or brittleness of the substrate.

Means of enhancing adhesion of non-stick coatings to a substrate are illustrated by the following patents.

U.S. 4,049,863 - Vassiliou (1977) teaches a primer containing fluoropolymer, such as polytetrafluoroethylene (PTFE), colloidal silica and a polyamide imide (PAI), along with other constituents, applied by various techniques to a substrate that is preferably pretreated by grit blasting, flame spraying of metals or metal oxides or frit coating, or to phosphated and chromated metals. The PTFE:PAI ratio can be 1:9. The primer coat is ordinarily applied to a dry film thickness (DFT) of about 2-15 microns ($\mu$m). After air drying, the primer is topcoated with a conventional fluoropolymer enamel and baked. (Parts, percentages and proportions herein are by weight except where indicated otherwise.)

U.S. 4,087,394 - Concannon (1987) discloses aqueous concentration gradient coatings of fluoropolymer which is 20-80% of a homopolymer or a copolymer of fluorinated ethylene-propylene (FEP) made of 5-100% tetrafluoroethylene (TFE) with 95-0% hexafluoropropylene (HFP), with 80-20% of a film forming polymer which can be PAI. The coating is applied by spraying onto aluminum sheet, or a variety of substrates. Other application techniques are mentioned. Nothing is said about substrate preparation. Although PTFE and FEP are treated as a continuum, there are no suggestions to use a blend such as 50% PTFE, 50% FEP.

U.S. 3,928,675 and 3,857,852, both to Tieszen, teach the use of high viscosity (>$10^{10}$) and low viscosity ($10^4$ poise) ($10^9$ and $10^3$ Pa Sec) PTFE along with polyarylene sulfide such as polyphenylene sulfide (PPS) in coatings.

## SUMMARY OF THE INVENTION

The present invention, in certain of its embodiments, provides a coating system comprising a substrate with a multi-layer non-stick coating, comprising a primer, a topcoat, and up to one or more intermediate coats between the primer and the topcoat, wherein:

the substrate is free of contaminants that would prevent adhesion of the coating,

the primer is applied to the substrate in the form of an aqueous dispersion comprising perfluorocarbon resin and at least one of polyamide imide, and polyether sulfone resins wherein the perfluorocarbon resin comprises 50-90% by weight of a first resin of polytetrafluoroethylene having a melt viscosity of at least about $10^{10}$ poises plus 50-10% of a second resin of perfluorinated copolymer of perfluoro alkyl vinyl ether, preferably perfluoro propyl vinyl ether, and tetrafluoroethylene (PFA) having a melt viscosity in the range of $10^3$ to $10^5$ poises, and

the topcoat and any intermediate coats comprise perfluorocarbon resin.

## DETAILED DESCRIPTION

The present invention permits not only lower cost by avoiding the roughening of the substrate but also smoother coated surfaces which can be advantageous for release on cookware, and for the gliding effect on steam iron sole plates. Also it can allow elimination of costly polishing of coated copier roll surfaces and application of dispersion PTFE coatings by coil coating and roller coating techniques.

Various embodiments of the invention involve using at least two PTFE resins having different melt viscosities in a primer or a topcoat. One pair of resins has relatively high and low melt viscosity resins. Another has relatively low and lower still melt viscosity resin.

The adhesion of high melt viscosity fluoropolymer coatings to all types of metal substrates, particularly to smooth metal, can be significantly improved through chemically induced stratification or formation of a concentration gradient in the primer.

Addition of perfluorocarbon polymer having a low melt viscosity (MV) in the range of $10^3$-$10^8$ poise ($10^2$-$10^7$ Pa Sec), to a primer system composed of PTFE with a high MV of $10^{11}$ poise ($10^{10}$ Pa Sec) and a polymeric binder such as polyamide-imide or polyphenylene sulfide, imparts a synergistic effect in which the fluoropolymer stratifies away from the substrate interface allowing the polymeric binder to obtain a higher concentration and degree of cure at the substrate interface resulting in improved adhesion. The required cure temperature to achieve this stratification can be modified by the choice of fluoropolymer.

Melt viscosity of perfluoropolymers can be determined by know technique such as that in U.S. Patent 4,636,549 - Gangal et al (1987). See Col. 4, lines 25 - 63.

With use of the coatings of the invention on smooth substrates, treated only by washing to remove grease and any other contaminants which might interfere with adhesion, coating systems of the invention give good food release and good resistance to usual durability tests such as the "tiger paw" abuse cooking tests involving a weighted holder with multiple ball point pen shafts rotating around the inside of a frying pan during cooking tests. The tests are generally described in U.S. patent 4,252,859, -- Concannon and Vary (1981) col. 2, lines 14-24.

Typical prior art preparation of surfaces to enhance adhesion of a release coating has involved etching or sand or grit blasting to develop a surface profile. The profile is measured in average microinches using a model RT 60 surface roughness tester made by Alpa Co. of Milan, Italy. The profile on typical rolled aluminum after washing to remove grease and contaminants is 16-24 microinches (.6 - 0.96 µm). The profile on steel varies more widely but is typically less than 50 microinches (2 µm). On both steel and aluminum, before a release coating is applied the profile typically is increased to over 100 micro inches (4 µm), preferably for aluminum for some uses to 180-220 micro inches (7.2 - 8.8 µm). Thus, the present invention is particularly useful with steel or aluminum substrates having a profile of less than 100, preferably less than 50 micro inches (less than 4 µm, preferably less than 2 µm).

Similar effects can be achieved using a low MV (at least $10^6$ $10^5$ Pa Sec) PTFE with a lower still MV ($10^3$ to $10^5$ poise or $10^2$ to $10^4$ M Pa Sec)PTFE. To obtain stratification, it is desirable to have a difference of at least $10^2$ poise in melt viscosities of the two PTFE's.

The primers of the invention can also be used on substrates roughened in various ways known in the art to make coating systems even better than without such undercoats. This can combine improved chemical adhesion with mechanical effects to produce products that may be superior.

In the following examples, the polyamide imide, colloidal silica and dispersions are known in the art and preferably are those of U.S. Patent 4,049,863 - Vassiliou (1977); the PFA is that generally disclosed in U.S. Patent 4,253,859-- Concannon and Vary (1981), but with a melt viscosity in the ranges of 2-4x$10^4$ poises, preferably in the form of a pulverized powder or a dried dispersion, either having an average particle size in the range of 20-25 µm; and the ultramarine blue is that of U.S. Patent 4,425,448 - Concannon and Rummel (1984).

The following examples and test data demonstrate this improved adhesion when used as a primer for fluoropolymer topcoats. The fluoropolymers are provided as 60% dispersions in water. As usual, the solids content of dispersions is indicated in the tables. The compositions were blended by techniques normal in the art and them applied to a smooth, degreased aluminum substrate by spraying.

EXAMPLE 1: FEP/PTFE - Multiple Coat System

Table 1

| Composition: 40% FEP/60% Primer PTFE | |
|---|---|
| Weight Percent | |
| 0.007 | Zinc oxide |
| 0.050 | "Afflair 153" titania coated mica from EM Industries |
| 6.497 | Ultramarine Blue pigment |
| 6.750 | "T-30" PTFE from Du Pont |
| 0.972 | "Ludox AM" colloidal silica from Du Pont |
| 4.153 | "TE9075" FEP from Du Pont |
| 4.641 | AI-10 polyamide imide resin from Amoco |
| 67.628 | Deionized water |
| 0.630 | "Triton X-100" octyl phenol polyether alcohol non-ionic surfactant from Rohm and Haas |
| 0.655 | Diethylethanolamine |
| 1.309 | Triethylamine |
| 3.614 | Furfuryl alcohol |
| 100.00 TOTAL | |

Table 2

| Topcoat | |
|---|---|
| Weight Percent | |
| 0.790 | "Afflair 153" |
| 0.389 | Channel black pigment |
| 0.172 | Ultramarine blue pigment |
| 0.195 | Aluminum silicate |
| 40.704 | "T-30" PTFE |
| 0.442 | Cerium octoate |
| 0.054 | Sodium polynaphthalene sulfonate |
| 1.834 | Diethylene glycol monobutylether |
| 0.928 | Oleic acid |
| 33.772 | Deionized water |
| 3.480 | Triethanol amine |
| 2.246 | Hydrocarbon solvent |
| 2.914 | "Triton X-100" |
| 12.080 | Acrylic latex of 39 parts by weight terpolymer of methylmethacrylate/57 part ethyl acrylate/4 parts methacrylic acid, dispersion at 40% solids in water, 0.2 sm average particle size |
| 100.00 | |

Application:

This system is comprised of a primer of PTFE, FEP and polyamide imide which is applied at 5-10 sm dry film thickness (DFT) to a metal surface which has been washed to remove oil and dirt contamination, air dried, and topcoated with a single (15-17.5 sm DFT) or multiple topcoats in thicknesses 12.5-17.5 sm DFT each and having compositions similar to those shown in Table 2. The films are baked 10 minutes at 150°C followed by a high temperature bake for a minimum of 3 minutes over 415°C.

Testing:

After application of a single layer coating on smooth, degreased 12 gauge aluminum substrate, cured under varying conditions, the coated substrate was soaked in boiling water for 20 minutes. The coating is cut down to the substrate, then a person attempts to pull back the coating with his fingernail. In the following Table, P indicates that the coating did not come loose, F indicates that it pulled back at least 1 cm.

Table 3

| Fingernail Adhesion on Smooth Aluminum Cure (Temp °C/Time - min) | | |
|---|---|---|
| 780/3 | 429/5 | 432/10 |
| P | P | P |

Tests without the FEP led to failure of this coating.

Two different proportions of FEP and PTFE were used as a primer with a topcoat on smooth aluminum cookware which was subjected to tiger paw testing, described above. The number of standard cooking cycles to a rating of 5, determined by coating deterioration, was recorded and presented below along with the percentages of the comparable value for a commercial coating on a grit-blasted substrate run as a control. The results are better than many good commercial products.

Table 4

| Cooking Performance of FEP/PTFE Primer | | | | |
|---|---|---|---|---|
| System | Cooks to Rating of 5 | | | |
| | DFT | Range | Average | % of Commercial |
| 40% FEP/60% PTFE | 1.0-1.1 | 80-120 | 95 | 114 |
| 30% FEP/70% PTFE | 1.0-1.1 | 80-120 | 103 | 124 |

EXAMPLE 2: FEP/PTFE - Multiple Coat System

Table 1

| Composition: 40% FEP/60% PTFE Primer | |
|---|---|
| Weight Percent | |
| 0.007 | Zinc Oxide |
| 0.050 | "Afflair 153" titania coated mica from EM Industries |
| 6.497 | Ultramarine Blue pigment |
| 6.750 | "T-30" PTFE from Du Pont |
| 0.972 | "Ludox AM" colloidal silica from Du Pont |
| 4.153 | "TE9075" FEP from Du Pont |
| 4.641 | AI-10 polyamide imide resin from Amoco |
| 67.628 | Deionized water |
| 0.630 | "Triton X-100" octyl phenol polyether alcohol non-ionic surfactant from Rohm and Haas |
| 0.655 | Diethylethanolamine |
| 1.309 | Triethylamine |
| 3.614 | Furfuryl alcohol |
| 100.00 TOTAL | |

## Claims

1.  A coated substrate comprising a substrate with a multi-layer non-stick coating, comprising a primer, a topcoat, and up to one or more intermediate coats between the primer and the topcoat, wherein;

    the substrate is free of contaminants that would prevent adhesion of the coating,

    the primer is applied to the substrate in the form of an aqueous dispersion comprising perfluorocarbon resin and at least one of polyamide imide and polyether sulfone resins wherein the perfluorocarbon resin comprises 50-90% by weight of a first resin of polytetrafluoroethylene having a melt viscosity of at least about $10^{10}$ poises plus 50-10% of a second resin selected from perfluorinated copolymer of hexafluoropropylene and tetrafluoroethylene having a melt viscosity in the range of $10^3$ to $10^8$ poises ($10^2$ to $10^7$ Pa Sec) and perfluorinated copolymer of perfluoro alkyl vinyl ether and tetrafluoroethylene having a melt viscosity in the range of $10^3$ to $10^5$ poises, and

    the topcoat and any intermediate coats comprise perfluorocarbon resin.

2.  The coated substrate of claim 1 wherein the melt viscosity of said first resin is at least $10^{11}$ poises and the melt viscosity of said second resin is in the range of $10^4$-$10^5$ poises.

3.  The coated substrate of claim 2 wherein selected copolymer is a copolymer of hexafluoropropylene and tetrafluoroethylene.

4.  The coated substrate of claim 1 wherein the selected copolymer is a copolymer of hexafluoropropylene and tetrafluoroethylene.

5.  The coated substrate of claim 1 wherein the substrate is metal selected from aluminum, stainless steel and carbon steel.

6.  The coated substrate of claim 5 wherein the substrate before coating has a surface roughness profile less than 2.5 microns.

7. The coated substrate of claim 5 wherein the substrate before coating has a surface roughness profile less than 1.25 microns.

8. The coated substrate of claim 1 wherein the primer contains 3-5% colloidal silica, 1-4% surfactant, 15-30% polyamide imide, and 25-55% perfluoropolymer consisting of 60-85% polytetrafluoroethylene, with balance of the perfluoropolymer being the copolymer.

9. The coated substrate of claim 1 wherein, before application of the undercoat, the surface of the substrate has been treated to remove contaminants that would interfere with adhesion but has not been etched or mechanically roughened.

10. The coated substrate of claim 1 wherein the primer coating resulting from said aqueous dispersion is not uniform in composition throughout its thickness but has a lower concentration of polytetrafluoroethylene at the interface with the substrate than at the opposite interface.

11. A process of making the coating substrate of claim 1 wherein the coatings are applied to the substrate without completely drying one coating before applying the next, and then the entire coating is cured by heating at at least 350°C.

**Patentansprüche**

1. Beschichtetes Substrat, umfassend ein Substrat mit einer mehrschichtigen nichtklebrigen Beschichtung, die einen Primer, eine Deckschicht und bis zu einer oder mehreren Zwischenschichten zwischen Primer und Deckschicht umfaßt, worin
das Substrat frei ist von Verunreinigungen, die die Haftung der Beschichtung verhindern würden,
der Primer auf das Substrat in Form einer wäßrigen Dispersion aufgetragen ist, die Perfluorkohlenstoffharz und wenigstens eines von Polyamidimid- und Polyethersulfonarz umfaßt, worin das Perfluorkohlenstoffharz 50 bis 90 Gew.-% eines ersten Harzes aus Polytetrafluorethylen, das eine Schmelzviskosität von wenigstens $10^{10}$ Poise aufweist, plus 50-10 % eines zweiten Harzes, ausgewählt aus einem perfluorierten Copolymer von Hexafluorpropylen und Tetrafluorethylen, das eine Schmelzviskosität im Bereich von $10^3$ bis $10^8$ Poise ($10^2$ bis $10^7$ Pa sec) aufweist, und ein perfluoriertes Copolymer von Perfluoralkylvinylether und Tetrafluorethylen, das eine Schmelzviskosität im Bereich von $10^3$ bis $10^5$ Poise aufweist, umfaßt, und
die Deckschicht und sämtliche Zwischenschichten Perfluorkohlenstoffharz umfassen.

2. Beschichtetes Substrat nach Anspruch 1, worin die Schmelzviskosität des ersten Harzes wenigstens $10^{11}$ Poise beträgt und die Schmelzviskosität des zweiten Harzes im Bereich von $10^4$-$10^5$ Poise liegt.

3. Beschichtetes Substrat nach Anspruch 2, worin das ausgewählte Copolymer ein Copolymer von Hexafluorpropylen und Tetrafluorethylen ist.

4. Beschichtetes Substrat nach Anspruch 1, worin das ausgewählte Copolymer ein Copolymer von Hexafluorpropylen und Tetrafluorethylen ist.

5. Beschichtetes Substrat nach Anspruch 1, worin das Substrat aus Aluminium, Edelstahl und Kohlenstoffstahl ausgewählt ist.

6. Beschichtetes Substrat nach Anspruch 5, worin das Substrat vor dem Beschichten ein Oberflächenrauhigkeitsprofil von weniger als 2,5 $\mu$m besitzt.

7. Beschichtetes Substrat nach Anspruch 5, worin das Substrat vor dem Beschichten ein Oberflächenrauhigkeitsprofil von weniger als 1,25 $\mu$m besitzt.

8. Beschichtetes Substrat nach Anspruch 1, worin der Primer 3-5 % kolloidale Kieselsäure, 1-4 % oberflächenaktives Mittel, 15-30 % Polyamidimid und 25-55 % Perfluorpolymer, bestehend aus 60-85 % Polytetrafluorethylen, enthält, wobei der Rest des Perfluorpolymeren das Copolymer ist.

9. Beschichtetes Substrat nach Anspruch 1, worin vor dem Auftragen der Grundschicht die Oberfläche des Substrats zur Entfernung von Verunreinigungen, die die Haftung stören würden, behandelt, jedoch nicht angeätzt oder mechanisch aufgerauht worden ist.

**10.** Beschichtetes Substrat nach Anspruch 1, worin die Primerschicht, die aus der wäßrigen Dispersion entsteht, über ihre Dicke in der Zusammensetzung nicht gleichmäßig ist, sondern an der Grenzfläche mit dem Substrat eine niedrigere Polytetrafluorethylen-Konzentration als auf der gegenüberliegenden Grenzfläche aufweist.

**11.** Verfahren zur Herstellung des Beschichtungssubstrates nach Anspruch 1, bei dem die Schichten auf das Substrat ohne vollständiges Trocknen einer Schicht vor dem Auftragen der Nächsten aufgetragen werden und sodann die gesamte Beschichtung durch Erhitzen auf wenigstens 350 °C gehärtet wird.

**Revendications**

**1.** Un substrat revêtu comprenant un substrat muni d'un revêtement multicouche antiadhérent, comprenant un primaire, une couche supérieure et jusqu'à une ou plusieurs couches intermédiaires entre le primaire et la couche supérieure, dans lequel :

le substrat est exempt d'impuretés qui pourraient empêcher l'adhérence du revêtement,

le primaire est appliqué au substrat sous la forme d'une dispersion aqueuse comprenant une résine perfluorocarbonée et au moins l'une de résines polyamide-imides et polyéthersulfones, la résine perfluorocarbonée comprenant 50 à 90 % en poids d'une première résine de polytétrafluoréthylène ayant une viscosité à l'état fondu d'au moins environ $10^9$ Pa.s plus 50 à 10 % d'une seconde résine choisie parmi un copolymère perfluoré d'hexafluoropropylène et de tétrafluoréthylène ayant une viscosité à l'état fondu comprise dans l'intervalle de $10^2$ à $10^7$ Pa.s et un copolymère perfluoré d'éther perfluoré d'alkyle et de vinyle et de tétrafluoréthylène ayant une viscosité à l'état fondu comprise dans l'intervalle de $10^2$ à $10^4$ Pa.s, et

la couche supérieure et toutes couches intermédiaires comprennent une résine perfluorocarbonée.

**2.** Le substrat revêtu de la revendication 1, dans lequel la viscosité à l'état fondu de ladite première résine est d'au moins $10^{10}$ Pa.s et la viscosité à l'état fondu de ladite seconde résine se situe dans l'intervalle de $10^3$ à $10^4$ Pa.s.

**3.** Le substrat revêtu de la revendication 2, dans lequel le copolymère choisi est un copolymère d'hexafluoropropylène et de tétrafluoréthylène.

**4.** Le substrat revêtu de la revendication 1, dans lequel le copolymère choisi est un copolymère d'hexafluoropropylène et de tétrafluoréthylène.

**5.** Le substrat revêtu de la revendication 1, dans lequel le substrat est un métal choisi parmi l'aluminium, l'acier inoxydable et l'acier au carbone.

**6.** Le substrat revêtu de la revendication 5, dans lequel le substrat, avant l'application du revêtement, a un profil de rugosité superficielle inférieur à 2,5 micromètres.

**7.** Le substrat revêtu de la revendication 5, dans lequel le substrat, avant l'application du revêtement, a un profil de rugosité superficielle inférieur à 1,25 micromètre.

**8.** Le substrat revêtu de la revendication 1, dans lequel le primaire contient 3 à 5 % de silice colloïdale, 1 à 4 % d'agent tensio-actif, 15 à 30 % de polyamide-imide et 25 à 55 % de polymère perfluoré consistant en 60 à 85 % de polytétrafluoréthylène, le reste du polymère perfluoré étant le copolymère.

**9.** Le substrat revêtu de la revendication 1, dans lequel, avant l'application de la sous-couche, la surface du substrat a été traitée pour éliminer les impuretés susceptibles de gêner l'adhérence, mais n'a pas été attaquée chimiquement ni rendue rugueuse mécaniquement.

**10.** Le substrat revêtu de la revendication 1, dans lequel la couche primaire résultant de ladite dispersion aqueuse n'a pas une composition uniforme suivant toute son épaisseur, mais présente une concentration de polytétrafluoréthylène plus basse à l'interface avec le substrat qu'à l'interface opposée.

**11.** Un procédé de fabrication du substrat revêtu de la revendication 1, dans lequel les couches sont appliquées au substrat sans sécher complètement une couche avant d'appliquer la suivante, puis le revêtement entier est durci par chauffage à 350°C au moins.